Europäisches Patentamt

European Patent Office

Office européen des brevets

(19)

(11) Publication number: **0 217 461**
B1

# EUROPEAN PATENT SPECIFICATION

(45) Date of publication of the patent specification:
07.02.90

(51) Int. Cl.⁴: **A01F 29/06,** A01F 29/00,
A01F 29/20, A01D 43/08

(21) Application number: 86201639.1

(22) Date of filing: 23.09.86

(54) Quick adjust shearbar mechanism.

(30) Priority: 04.10.85 US 784391

(43) Date of publication of application:
08.04.87 Bulletin 87/15

(45) Publication of the grant of the patent:
07.02.90 Bulletin 90/6

(84) Designated Contracting States:
DE FR GB

(56) References cited:
DE-A- 2 926 538
DE-A- 3 337 177
US-A- 4 436 248

(73) Proprietor: FORD NEW HOLLAND, INC. (a Delaware
corp.), 500 Diller Avenue, New Holland
Pennsylvania 17557(US)

(72) Inventor: Martenas, Wayne B., Maria van
Bourgondielaan 29, B-8000 Brugge(BE)

(74) Representative: Vandenbroucke, Alberic T.J., FORD
NEW HOLLAND N.V. Leon Claeysstraat 3A,
B-8210 Zedelgem(BE)

## Description

The present invention relates generally to precision type forage harvesters utilizing knives mounted to a cutterhead for cooperative action against a shearbar to chop crop material and, more particularly, to a quick adjust mechanism for facilitating the adjustment of the positional relationship between the shearbar and the movable knives.

Typically, quick adjust shearbar mechanisms utilize mechanical linkages to move the shearbar relative to the rotating knives. One such adjustable shearbar apparatus can be seen in US-A 4 436 248.

The problems encountered in such shearbar adjustment mechanisms, i.e., mechanisms in which the mechanical linkages induce movement of a clamped in place shearbar, involve bowing of the shearbar, torque fluctuations encountered in the shearbar clamping bolts, and difficulties in the serviceability due to the general complexity of the adjustment mechanism. Accordingly, it is the objective of the present invention to overcome these problems. More specifically, it is the objective to provide a shearbar adjustment mechanism on a forage harvester with improved serviceability and which eliminates the shearbar bowing problems as well as the torque fluctuation problems in the shearbar clamping means.

According to the invention a forage harvester is provided having a cutterhead assembly including a rotary cutterhead with a plurality of knives, which, upon rotation of the cutterhead, are cooperable with an elongated shearbar positioned at a minimal spacing from the cutterhead knife path so that crop material fed to the cutterhead is comminuted between the cutterhead knives and the shearbar; the cutterhead assembly further also including a shearbar adjustment mechanism for adjusting the spacing of the shearbar from the cutterhead knife path and which comprises adjacent each end of the shearbar:

– support means for supporting the shearbar in an operative position relative to the cutterhead knife path;
– clamping means cooperable with the support means and the shearbar to urge the latter against said support means and hold it in the operative position relative to the cutterhead knife path during normal operation;
– a lever pivotally mounted proximate to the support means for pivotal movement relative thereto;
– transmission means between the lever and the corresponding shearbar end for detachably affixing said lever to said shearbar end; and
– shifting means connected to the lever for pivotally moving said lever to effect adjustment movement of the shearbar relative to the cutterhead knife path; and
the forage harvester further being characterized in that each transmission means comprises a ball joint type coupling means permitting the shearbar to be moved linearly by the pivotal movement of said lever.

Preferably the support means adjacent both ends of the shearbar are formed by a single elongated support member of substantially the same length as the shearbar and which is connected to opposing side sheets of the cutterhead assembly and extends generally therebetween across the full width of the cutterhead and beneath the shearbar. The clamping means are formed by clamping members connected to the support member adjacent the corresponding shearbar ends and which are engageable with said corresponding shearbar ends to urge the shearbar against the support member. Preferably the clamping members are generally aligned with the longitudinal shearbar axis and are detachably connected to the support member by threaded members and dowels positioned in line with the shearbar axis.

The clamping members clamp the shearbar to the support member in a direction at a right angle to the direction of adjustment movement of the shearbar. The clamping force exerted by the clamping members on the shearbar is such as to positionally retain the shearbar relative to the support member during normal operation of the harvester on the one hand and to permit adjustment movement of the shearbar relative to the cutterhead knife path upon actuation of the shifting means on the other hand.

The pivotal mounting of each lever is located in offset relationship relative to the shearbar axis which preferably is rearwardly of said shearbar axis as seen in the direction of operative travel of the harvester. This offset pivotal mounting of the levers permits said levers to be positioned closer to the cutterhead chamber, thus reducing the span between the levers. This reduced span between adjustment levers reduces shearbar deflections. Each lever is pivotally mounted on a pivot member defining a pivot axis which preferably extends parallel to the shearbar axis. Each said pivot member is at least partially supported by the support member.

Each transmission means includes a threaded fastener received through an opening extending through the corresponding lever and threadably engaged with the shearbar. The coupling of each transmission means to the corresponding shearbar end is positioned relative to the corresponding clamping member such that the lines of action of the adjustment force transmitted through said transmission means to the shearbar and of the clamping force exerted by the corresponding clamping member on said shearbar generally intersect each other, preferably at right angles.

The opening through each lever is larger than the corresponding threaded fastener to accommodate relative movement therebetween when pivotal movement of said levers induces linear movement to said shearbar. The ball joint type coupling means of each transmission means includes at least one cup-and-ball washer assembly in register with the opening in the lever and through the openings of which the threaded lever extends to facilitate said relative movement while permitting the shearbar to be clamped tightly against the levers. Preferably a cup-and-ball washer assembly is positioned on either side of the lever in register with the opening therein. Each fastener may be in the form of a capscrew received through the openings in each cup-and-ball washer assembly and which is operable to positionally fix the shearbar relative to the ball joint type coupling means. Each capscrew preferably is positioned in the plane defined by the pivotal movement of the corresponding lever.

The shifting means for controlling the pivotal movement of the levers may comprise motor means which can be energized to adjust the shearbar.

An advantage of this invention is that accuracy of the shearbar adjustment is improved which in turn provides better machine operating efficiency. Also shearbar clamp bolt torque fluctuations are reduced and finally a quick adjust shearbar mechanism for a forage harvester is provided which is durable in construction, inexpensive of manufacture, facile in assemblage and simple and effective in use.

The advantages of this invention will become apparent upon consideration of the following detailed disclosure of the invention, especially when taken in conjunction with the accompanying drawings wherein:

Fig. 1 is a partially side elevational view of a cutterhead assembly for a forage harvester, incorporating the principles of the instant invention;

Fig. 2 is a partial cross-sectional view taken along lines 2–2 of Fig. 1 to show the apparatus for positionally supporting the shearbar; and

Fig. 3 is an enlarged partial cross-sectional view of the shearbar support apparatus taken along lines 3–3 of Fig. 2.

The terms "forward", "rearward", "left" and "right" etc. used in connection with the forage harvester and/or components thereof are determined with reference to the direction of forward operative travel of the machine but should not be construed as limiting.

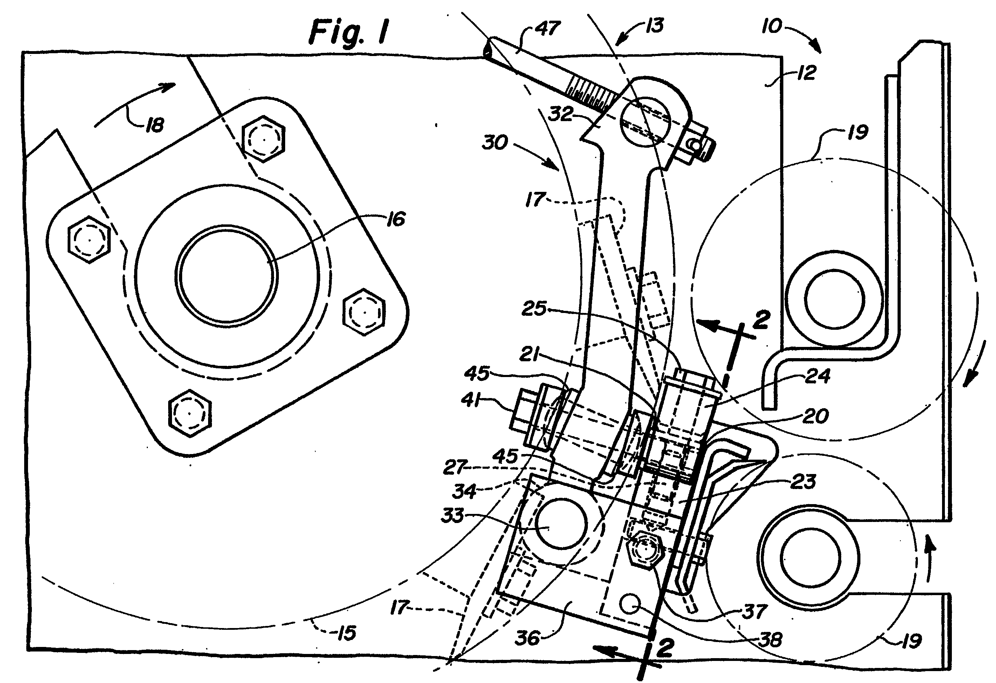

Referring now to the drawings and, particularly to Fig. 1, a partial side elevational view of a cutterhead assembly for a forage harvester, such as shown in US-A 4 436 248, the description of which is hereby incorporated herein by reference, can be seen. The forage harvester 10 includes a side sheet 12 which at least partially defines a cutterhead chamber 13 and rotatably supports a cutterhead 15 for rotation about an axis of rotation 16. The cutterhead 15 is provided with a plurality of knives 17 detachably affixed thereto in a conventional manner about the circumference of the cutterhead 15 for rotation in the direction indicated by arrow 18. A pair of feed rolls 19 feed a mat of crop material over a shearbar 20 positioned in a cooperative relationship with the rotating knives 17 to effect a comminuting of the mat of crop material by the shearing action between the knives 17 and the shearbar 20.

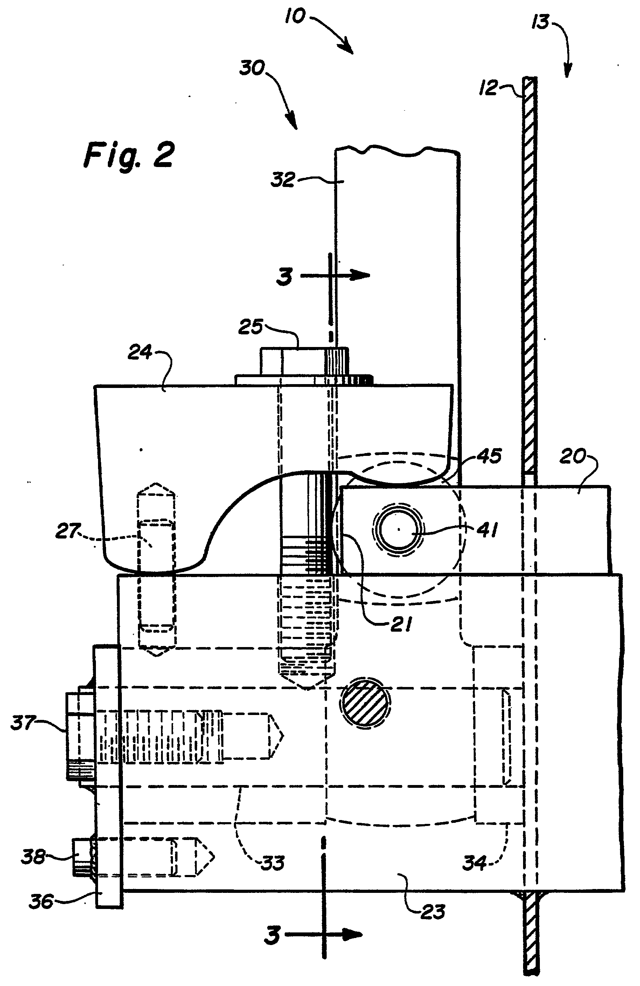

Referring now to Figs. 1–3, the elongated shearbar 20 extends across the entire transverse width of the cutterhead 15 and is supported at either end 21 exteriorly of the side sheet 12 by a lower support member 23 and an upper clamping member 24. Each end 21 of the shearbar 20 is clamped between the corresponding upper clamping member 24 and the corresponding lower shearbar support member 23 by a clamp bolt 25 extending through said upper clamping member 24 and threadably engaged with said lower support member 23. A dowel 27 positionally retains each upper clamping member 24 relative to the corresponding lower support member 23. Both the clamp bolt 25 and the dowel 27 at each end 21 of the shearbar 20 are positioned in line with the transverse axis of the shearbar 20.

The adjustment mechanism 30 includes a lever 32 pivotally supported on each respective side sheet 12 about a pivot member 33 defining a pivot axis. Each pivot member 33 is supported by a collar 34 affixed to the respective side sheet 12 and a bracket 36 detachably affixed to the corresponding lower support member 23 by a fastener 37 and a positioning pin 38. The levers 32 are then pivotally movable in generally a fore-and-aft direction generally parallel to and along the exterior of the side sheet 12.

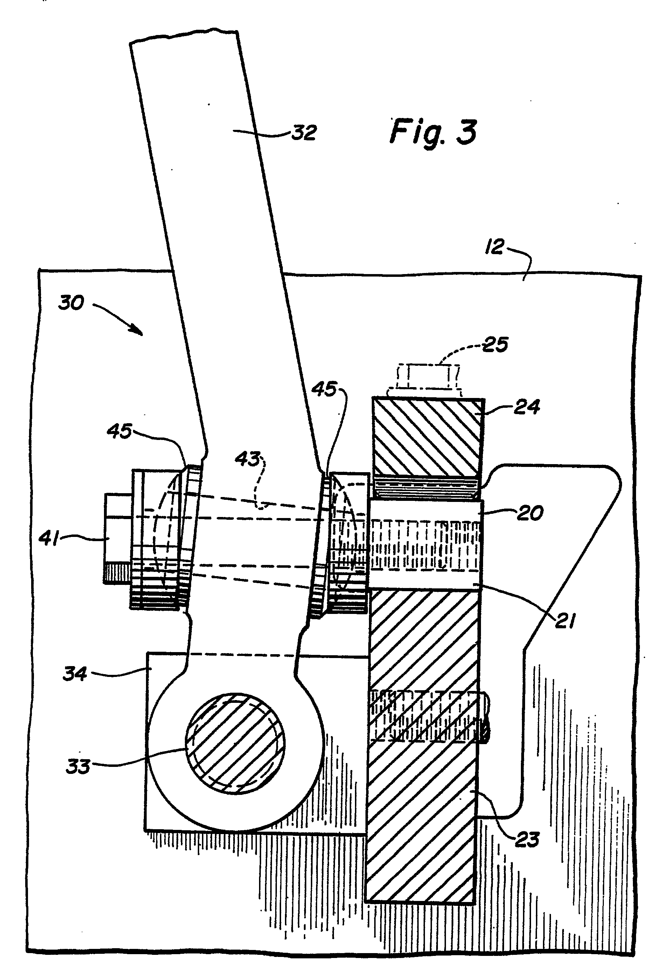

Each respective lever 32 is connected to the corresponding end 21 of the shearbar 20 by a capscrew 41 extending through an oversized opening 43 in the lever 32 into a threaded engagement with the corresponding end 21 of the shearbar 20. As best seen in Fig. 3, a pair of cooperable cup-and-ball washers 45 positioned on opposing sides of the respective levers 32 give a "ball joint" effect to permit a positional rotation of the levers 32 relative to the corresponding capscrews 41, allowing a generally linear motion of the shearbar 20 and engaged capscrews 41 while that the levers 32 are pivoted about their pivot members 33 defining the pivot axis thereof rearwardly of the shearbar 20.

As best seen in Fig. 1, manipulation of the actuation linkages 47 causes a pivotal movement of the levers 32 about the pivot members 33. The relative rotative movement between the cup-and-ball washer assemblies 45 creating a "ball joint" effect, permits the levers 32 to be rotatably moved about the pivot members 33 while effecting a substantially linear motion of the shearbar 20 between lower support members 23 and the upper clamping members 24 by pulling on the capscrews 41. This motion permits a positional adjustment of the shearbar 20 relative to the rotating knives 17 to selectively acquire the proper cooperation therebetween for effecting the most efficient chopping of crop material fed by the feed rolls 19. The positioning of the pivot members 33 for the levers 32 rearwardly of the lower shearbar support members 23, as seen in the direction of forward operative travel of the harvester, allows the levers 32 to be positioned closer to the cutterhead sidesheets 12 thereby reducing the span between the two levers 32 and thus reducing possible shearbar deflections.

Furthermore, with the levers 32 pivotally positioned as described above, the upper clamping members 24 can be positioned so that the clamping loads exerted thereby on the shearbar are positioned within the generally vertical and fore-and-aft extending planes defined by the pivotal movement of the respective levers 32. Thereby any bending moment created from heretofore known offset clamping positions is avoided. In this respect it is remarked that for adjusting the position of the shearbar 20 relative to the cutterhead knife path it is not necessary to release the clamping bolts 25. Indeed, these clamping bolts 25 should be tightened sufficiently to positively hold the shearbar 20 in the operative position during normal operation on the one hand, but should not prevent the adjustment relative to the cutterhead knife path through pivotal movement of the pivot levers 32 on the other hand. This is made possible by orienting the clamping forces at right angles to the direction of shearbar adjustment relative to the cutterhead knife path.

The positioning of the upper clamping members 24 so that the clamping loads are positioned within the vertical planes defined by the pivotal movement of the respective levers 32, minimizes torque variations on the clamp bolts 25 because the shearbar 20 and the upper clamping member 24 are both supported on the lower shearbar support 23. The positioning of the levers 32 behind the lower shearbar support 23 permits the connections between the shearbar 20 and the levers 32 to be accomplished with a single capscrew on each side of the cutterhead 15. These capscrews 41 clamp the shearbar 20 against ball joint effect washer assemblies 45 to allow the levers 32 to rotate while the shearbar 20 moves linearly. These simple clamp arrangements also allow for easier shearbar removal for replacement or turning.

It will be understood that changes to the details, materials, steps and arrangement of parts which have been described and illustrated to explain the nature of this invention will occur to and may be made by those skilled in the art upon a reading of this disclosure within the principles and scope of the claims. The foregoing description illustrates the preferred embodiment of the invention; however, concepts, as based upon the description may be employed in other embodiments within the scope of the claims.

As an example, in one arrangement the actuation linkages 47 may have threaded ends upon which nuts are provided in engagement with a frame member of the machine. Manipulation of the linkages 47 thus is accomplished using a wrench to turn said nuts against said frame member whereby the linkages 47, cause the levers 32 to pivot. In an alternative arrangement the linkages 47 may be coupled to hydraulic or electric motors which can be energized e.g. from the operator's platform. Each linkage 47 may have its own motor, or, alternatively, both linkages 47 may be coupled to a single motor.

As far as the cup-and-ball washer assemblies 45 are concerned, it will be clear to those skilled in the art that these assemblies can be substituted by other coupling means provided the "ball joint" effect is maintained.

## Claims

1. A forage harvester (10) having a cutterhead assembly including a rotary cutterhead (15) with a plurality of knives (17) which, upon rotation of the cutterhead (15), are cooperable with an elongated shearbar (20) positioned at a minimal spacing from the cutterhead knife path so that crop material fed to the cutterhead (15) is comminuted between the cutterhead knives (17) and the shearbar (20); the cutterhead assembly further also including a shearbar adjustment mechanism (30) for adjusting the spacing of the shearbar (20) from the cutterhead knife path and which comprises adjacent each end (21) of the shearbar (20):
   - support means (23) for supporting the shearbar (20) in an operative position relative to the cutterhead knife path;
   - clamping means (24) cooperable with the support means (23) and the shearbar (20) to urge the latter against said support means (23) and hold it in the operative position relative to the cutterhead knife path during normal operation;
   - a lever (32) pivotally mounted proximate to the support means (23) for pivotal movement relative thereto;
   - transmission means (41, 43, 45) between the lever (32) and the corresponding shearbar end (21) for detachably affixing said lever (32) to said shearbar end (21); and
   - shifting means (47) connected to the lever (32) for pivotally moving said lever (32) to effect adjustment movement of the shearbar (20) relative to the cutterhead knife path;
   characterized in that each transmission means (41, 43, 45) comprises a ball joint type coupling means (45) permitting the shearbar (20) to be moved linearly by the pivotal movement of said lever (32).

2. A forage harvester according to claim 1, characterized in that the support means adjacent both ends (21) of the shearbar (20) are formed by an elongated support member (23) of substantially the same length as the shearbar (20) and which is connected to opposing side sheets (12) of the cutterhead assembly and extends generally therebetween across the full width of the cutterhead (15) and beneath said shearbar (20).

3. A forage harvester according to claim 2, characterized in that the clamping means are formed by clamping members (24) connected to the support member (23) adjacent the corresponding shearbar ends (21) and engageable with said corresponding shearbar ends (21) to urge the shearbar (20) against said support member (23).

4. A forage harvester according to claim 3, characterized in that the clamping members (24) are generally aligned with the longitudinal shearbar axis.

5. A forage harvester according to claim 3 or 4, characterized in that the clamping members (24) are detachably connected to the support member (23) by threaded members (25) positioned in line with the shearbar axis.

6. A forage harvester according to any of the claims 3 to 5, characterized in that a dowel (27) positionally retains each clamping member (24) relative to the support member (23); said dowel (27) being positioned in line with the shearbar axis.

7. A forage harvester according to any of the claims 3 to 6, characterized in that the clamping members (24) clamp the shearbar (20) to the support member (23) in a direction at a right angle to the direction of adjustment movement of the shearbar (20); the clamping force exerted by the clamping members (24) on the shearbar (20) being such as to positionally retain the shearbar (20) relative to the support member (23) during normal operation of the harvester on the one hand and to permit adjustment movement of the shearbar (20) relative to the cutterhead knife path upon actuation of the shifting means (47) on the other hand.

8. A forage harvester according to any one of the preceding claims, characterized in that the pivotal mounting of each lever (32) is located in offset relationship relative to the shearbar axis.

9. A forage harvester according to claim 8, characterized in that each lever (32) is pivotally mounted on a pivot member (33) defining a pivot axis; each said pivot member (33) being at least partially supported by the support member (23) rearwardly of the shearbar axis as seen in the direction of operative travel of the harvester.

10. A forage harvester according to claim 9, characterized in that the pivot axis of each pivot member (33) extends parallel to the shearbar axis.

11. A forage harvester according to any one of the preceding claims, characterized in that each transmission means (41, 43, 45) incudes a threaded fastener (41) received through an opening (43) extending through the corresponding lever (32) and threadably engaged with the shearbar (20).

12. A forage harvester according to claim 11 when appended to any one of the claims 3 to 7, characterized in that the coupling of each transmission means (41, 43, 45) to the corresponding shearbar end (21) is positioned relative to the corresponding clamping member (24) such that the lines of action of the adjustment force transmitted through said transmission means (41, 43, 45) to the shearbar (20) and of the clamping force exerted by the corresponding clamping member (24) on said shearbar (20) generally intersect each other.

13. A forage harvester according to claim 12, characterized in that the said lines of action intersect each other at right angles.

14. A forage harvester according to anyone of the claims 11 to 13, characterized in that the opening (43) through each lever (32) is larger than the corresponding threaded fastener (41) to accommodate relative movement therebetween when pivotal movement of said levers (32) induces linear movement to said shearbar (20).

15. A forage harvester according to claim 14, characterized in that the ball joint coupling means of each transmission means (41, 43, 45) includes at least one cup-and-ball washer assembly (45) in register with the opening (43) in the lever (32) and through the openings of which the threaded fastener (41) extends to facilitate said relative movement between the lever (32) and the corresponding fastener (41) while permitting the shearbar (20) to be clamped tightly against the levers (32).

16. A forage harvester according to claim 15, characterized in that the ball joint coupling means of each transmission means (41, 43, 45) comprises cup-and-ball washer assemblies (45) positioned on either side of the lever (32) in register with the opening (43) therein and through the openings of which the threaded fastener extends.

17. A forage harvester according to claim 16, characterized in that the fastener is a capscrew (41) received through the openings in each cup-and-ball washer assembly (45) and which is operable to positionally fix the shearbar (20) relative to the ball joint type coupling means.

18. A forage harvester according to claim 17, characterized in that each capscrew (41) is positioned in the plane defined by the pivotal movement of the corresponding lever (32).

19. A forage harvester according to anyone of the preceding claims, characterized in that the shifting means (47) comprise motor means which can be energized to adjust the shearbar (20).

**Patentansprüche**

1. Feldhäcksler (10) mit einer Schneidkopfbaugruppe, die einen rotierenden Schneidkopf (15) mit einer Vielzahl von Messern (17) einschließt, die bei einer Drehung des Schneidkopfes (15) mit einem langgestreckten Scherbalken (20) zusammenwirken, der mit einem minimalen Abstand von der Bahn der Messer des Schneidkopfes angeordnet ist, sodaß dem Schneidkopf (15) zugeführtes Erntematerial zwischen den Schneidkopf-Messern (17) und dem Scherbalken (20) zerkleinert wird, wobei die Schneidkopfbaugruppe weiterhin einen Scherbalken-Einstellmechanismus (30) einschließt, der zur Einstellung des Abstandes des Scherbalkens (20) von der Bahn der Messer des Schneidkopfes dient und der benachbart zu jedem Ende (21) des Scherbalkens (20) folgende Teile aufweist:
   — Halterungseinrichtungen (23) zur Halterung des Scherbalkens (20) in einer Betriebsstellung bezüglich der Bahn der Messer des Schneidkopfes,
   — Klemmeinrichtungen (24), die mit den Halterungseinrichtungen (23) und dem Scherbalken (20) zusammenwirken, um diesen gegen die Halterungseinrichtungen (30) zu drücken und ihn im Normalbetrieb in der Betriebsstellung bezüglich der Bahn der Messer des Schneidkopfes zu halten,
   — einen Hebel (32), der schwenkbar in der Nähe der Halterungseinrichtungen (23) für eine Schwenkbewegung relativ hierzu befestigt ist,
   — Kraftübertragungseinrichtungen (41, 43, 45) zwischen dem Hebel (32) und dem entsprechenden Scherbalkenende (21) zur lösbaren Befestigung des Hebels (32) an dem Scherbalkenende (21), und
   — Verstelleinrichtungen (47), die mit dem Hebel (32) verbunden sind, um den Hebel (32) schwenkend zu bewegen, um eine Einstellbewegung des Scherbalkens (20) gegenüber der Bahn der Messer des Schneidkopfes zu bewirken, dadurch gekennzeichnet, daß jede Kraftübertragungseinrichtung (41, 43, 45) eine Kupplungseinrichtung (45) vom Kugelgelenktyp aufweist, die eine lineare Bewegung des Scherbalkens (20) aufgrund der Schwenkbewegung des Hebels (32) ermöglicht.

2. Feldhäcksler nach Anspruch 1, dadurch gekennzeichnet, daß die Halterungseinrichtungen benachbart zu den beiden Enden (21) des Scherbalkens (20) durch ein langgestrecktes Halterungsteil (23) mit im wesentlichen der gleichen Länge wie der Scherbalken (20) gebildet sind, und daß das Halterungsteil (23) mit gegenüberliegenden Seitenblechen (12) der Schneidkopfbaugruppe verbunden ist und sich allgemein zwischen diesen über die volle Breite des Schneidkopfes (15) und unterhalb des Scherbalkens (20) erstreckt.

3. Feldhäcksler nach Anspruch 2, dadurch gekennzeichnet, daß die Klemmeinrichtungen durch Klemmteile (24) gebildet sind, die mit dem Halterungsteil (23) benachbart zu den entsprechenden Scherbalkenenden (21) verbunden sind und mit den entsprechenden Scherbalkenenden (21) in Eingriff bringbar sind, um den Scherbalken (20) gegen das Halterungsteil (23) zu drücken.

4. Feldhäcksler nach Anspruch 3, dadurch gekennzeichnet, daß die Klemmteile (24) allgemein mit der Längsachse des Scherbalkens ausgerichtet sind.

5. Feldhäcksler nach Anspruch 3 oder 4, dadurch gekennzeichnet, daß die Klemmteile (24) mit dem Halterungsteil (23) mit Hilfe von Gewindebauteilen (35) lösbar verbunden sind, die entlang der Scherbalken-Achse angeordnet sind.

6. Feldhäcksler nach einem der Ansprüche 3 bis 5, dadurch gekennzeichnet, daß ein Paßzapfen (27) die Position jedes Klemmteils (24) bezüglich des Halterungsteils (23) festlegt und daß der Paßzapfen (27) entlang der Scherbalken-Achse angeordnet ist.

7. Feldhäcksler nach einem der Ansprüche 3 bis 6, dadurch gekennzeichnet, daß die Klemmteile (24) den Scherbalken (20) an dem Halterungsteil (23) in einer Richtung unter einem rechten Winkel zur Richtung der Einstellbewegung des Scherbalkens (20) festklemmen und daß die von den Klemmteilen (24) auf den Scherbalken (20) ausgeübte Klemmkraft derart ist, daß der Scherbalken (20) einerseits hinsichtlich seiner Position gegenüber dem Halterungsteil (23) während des Normalbetriebs des Feldhäckslers festgehalten wird und daß andererseits eine Einstellbewegung des Scherbalkens (20) gegenüber der Bahn der Messer des Schneidkopfes bei einer Betätigung der Verstelleinrichtungen (47) möglich ist.

8. Feldhäcksler nach einem der vorhergehenden Ansprüche, dadurch gekennzeichnet, daß die Schwenkbefestigung jedes Hebels (32) in einer versetzten Beziehung relativ zur Achse des Scherbalkens liegt.

9. Feldhäcksler nach Anspruch 8, dadurch gekennzeichnet, daß jeder Hebel (32) schwenkbar auf einem Schwenkteil (33) befestigt ist, das eine Schwenkachse bildet, und das jedes Schwenkteil (33) zumindest teilweise von dem Halterungsteil (23) bei Betrachtung in Richtung der Betriebsbewegung des Feldhäckslers hinter der Scherbalken-Achse gehalten ist.

10. Feldhäcksler nach Anspruch 9, dadurch gekennzeichnet, daß sich die Schwenkachse jedes Schwenkteils (33) parallel zur Scherbalken-Achse erstreckt.

11. Feldhäcksler nach einem der vorhergehenden Ansprüche, dadurch gekennzeichnet, daß jede Kraftübertragungseinrichtung (41, 43, 45) ein Gewindebefestigungsteil (41) einschließt, das von einer sich durch den entsprechenden Hebel (32) erstreckenden Öffnung (43) aufgenommen wird und in Gewindeeingriff mit dem Scherbalken (20) steht.

12. Feldhäcksler nach Anspruch 11 unter Rückbeziehung auf einen der Ansprüche 3 bis 7, dadurch gekennzeichnet, daß die Kupplung jeder Kraftübertragungseinrichtung (41, 43, 45) mit dem entsprechenden Scherbalkenende (21) bezüglich des entsprechenden Klemmteils (24) derart angeordnet ist, daß sich die Wirkungslinien der Einstellkraft, die durch die Kraftübertragungseinrichtungen (41, 43, 45) auf den Scherbalken (20) übertragen wird, und der Klemmkraft, die von dem entsprechenden Klemmteil (24) auf den Scherbalken (20) übertragen wird, einander allgemein schneiden.

13. Feldhäcksler nach Anspruch 12, dadurch gekennzeichnet, daß die Wirkungslinien einander unter einem rechten Winkel schneiden.

14. Feldhäcksler nach einem der Ansprüche 10 bis 13, dadurch gekennzeichnet, daß die Öffnung (43) durch jeden Hebel (32) größer als das entsprechende Gewindebefestigungsteil (41) ist, um eine Relativbewegung zwischen diesen Teilen zu ermöglichen, wenn die Schwenkbewegung der Hebel (32) eine Linearbewegung des Scherbalkens (20) hervorruft.

15. Feldhäcksler nach Anspruch 14, dadurch gekennzeichnet, daß die Kugelgelenk-Kupplungseinrichtungen jeder Kraftübertragungseinrichtung (41, 43, 45) zumindest eine Kalotten- und Kugel-Beilagscheibenbaugruppe (45) einschließen, die mit der Öffnung (43) in dem Hebel (32) ausgerichtet ist und durch deren Öffnungen sich das Gewindebefestigungsteil (41) erstreckt, um die Relativbewegung zwischen dem Hebel (32) und dem entsprechenden Gewindebefestigungsteil (41) zu erleichtern, während der Scherbalken (20) fest gegen die Hebel (32) festgespannt werden kann.

16. Feldhäcksler nach Anspruch 15, dadurch gekennzeichnet, daß die Kugelgelenk-Kupplungseinrichtungen jeder Kraftübertragungseinrichtung (41, 43, 45) Kalotten- und Kugel-Beilagscheibenbaugruppen (45) umfassen, die auf beiden Seiten des Hebels (32) in Ausrichtung mit der darin ausgebildeten Öffnung (43) angeordnet sind und durch deren Öffnungen sich das Gewindebefestigungsteil erstreckt.

17. Feldhäcksler nach Anspruch 16, dadurch gekennzeichnet, daß das Gewindebefestigungsteil eine Kopfschraube (41) ist, die von den Öffnungen in jeder Kalotten- und Kugel-Beilagscheibenbaugruppe (45) aufgenommen wird und die so betätigbar ist, daß sie die Lage des Scherbalkens (20) bezüglich der Kugelgelenk-Kupplungseinrichtungen festlegt.

18. Feldhäcksler nach Anspruch 17, dadurch gekennzeichnet, daß jede Kopfschraube (41) in der Ebene angeordnet ist, die durch die Schwenkbewegung des entsprechenden Hebels (32) festgelegt ist.

19. Feldhäcksler nach einem der vorhergehenden Ansprüche, dadurch gekennzeichnet, daß die Verstelleinrichtungen (47) Motoreinrichtungen einschließen, die ansteuerbar sind, um den Scherbalken (20) einzustellen.

## Revendications

1. Récolteuse-hacheuse de fourrage (10) équipée d'un ensemble de mécanisme de coupe comportant un mécanisme de coupe rotatif (15) pourvu d'une série de couteaux (17) qui, lors d'une rotation du mécanisme de coupe (15), sont aptes à coopérer avec une barre de cisaillement allongée (20) positionnée avec un écartement minimal par rapport à la trajectoire des couteaux de mécanisme de coupe, de sorte que des produits de récolte délivrés au mécanisme de coupe (15) sont hachés en petits morceaux entre les couteaux de mécanisme de coupe (17) et la barre de cisaillement (20); l'ensemble de mécanisme de coupe comportant, en outre, un mécanisme d'ajustement de barre de cisaillement (30) destiné à ajuster l'écartement de la barre de cisaillement (20) par rapport à la trajectoire des couteaux de mécanisme de coupe, et qui comprend, à proximité de chacune des extrémités (21) de la barre de cisaillement (20):
   - des moyens de support (23) pour supporter la barre de cisaillement (20) dans une position active par rapport à la trajectoire des couteaux de mécanisme de coupe;
   - des moyens de serrage (24) aptes à coopérer avec les moyens de support (23) et la barre de cisaillement (20) pour presser cette dernière contre lesdits moyens de support (23) et pour, en fonctionnement normal, la maintenir dans la position active par rapport à la trajectoire des couteaux de mécanisme de coupe;
   - un levier (32) monté pivotant à proximité des moyens de support (23) en vue d'un mouvement de pivotement vis-à-vis de ceux-ci;
   - des moyens de transmission (41, 43, 45) situés entre le levier (32) et l'extrémité de barre de cisaillement (21) correspondante, pour fixer d'une manière détachable ledit levier (32) à ladite extrémité de barre de cisaillement (21); et
   - des moyens de déplacement (47) reliés au levier (32) pour déplacer d'une manière pivotante ledit levier (32), afin d'opérer un mouvement d'ajustement de la barre de cisaillement (20) par rapport à la trajectoire des couteaux de mécanisme de coupe;

et caractérisée en ce que chacun des moyens de transmission (41, 43, 45) comporte un moyen d'accouplement du type à joint universel (45) permettant un déplacement linéaire de la barre de cisaillement (20) sous l'effet du mouvement de pivotement dudit levier (32).

2. Récolteuse-hacheuse de fourrage selon la revendication 1, caractérisée en ce que les moyens de support proches des deux extrémités (21) de la barre de cisaillement (20) sont constitués par un organe de support allongé (23) sensiblement de même longueur que la barre de cisaillement (20) et relié à des tôles latérales opposées (12) de l'ensemble de mécanisme de coupe pour s'étendre, d'une manière générale, entre celles-ci transversalement sur toute la largeur du mécanisme de coupe (15) et au-dessous de ladite barre de cisaillement (20).

3. Récolteuse-hacheuse de fourrage selon la revendication 2, caractérisée en ce que les moyens de serrage sont constitués par des organes de serrage (24) reliés à l'organe de support (23) proche des extrémités de barre de cisaillement (21) respectives, et aptes à venir en prise avec lesdites extrémités de barre de cisaillement (21) respectives, pour presser la barre de cisaillement (20) contre ledit organe de support (23).

4. Récolteuse-hacheuse de fourrage selon la revendication 3, caractérisée en ce que les organes de serrage (24) sont, dans l'ensemble, alignés avec l'axe longitudinal de barre de cisaillement.

5. Récolteuse-hacheuse de fourrage selon la revendication 3 ou 4, caractérisée en ce que les organes de serrage (24) sont reliés d'une manière détachable à l'organe de support (23) au moyen d'organes filetés (25) positionnés en alignement avec l'axe de barre de cisaillement.

6. Récolteuse-hacheuse de fourrage selon l'une quelconque des revendications 3 à 5, caractérisée en ce qu'une cheville (27) retient en position chacun des organes de serrage (24) par rapport à l'organe de support (23); ladite cheville (27) étant positionnée en alignement avec l'axe de barre de cisaillement.

7. Récolteuse-hacheuse de fourrage selon l'une quelconque des revendications 3 à 6, caractérisée en ce que les organes de serrage (24) serrent la barre de cisaillement (20) contre l'organe de support (23) dans une direction orientée à angle droit par rapport à la direction de mouvement d'ajustement de la barre de cisaillement (20); la force de serrage exercée sur la barre de cisaillement (20) par les organes de serrage (24) étant de nature, d'une part, à retenir la barre de cisaillement (20) en position par rapport à l'organe de support (23), pendant un fonctionnement normal de la récolteuse-hacheuse, et, d'autre part, à permettre un mouvement d'ajustement de la barre de cisaillement (20) par rapport à la trajectoire des couteaux de mécanisme de coupe, lors d'un actionnement des moyens de déplacement (47).

8. Récolteuse-hacheuse de fourrage selon l'une quelconque des revendications précédentes, caractérisée en ce que le montage pivotant de chacun des leviers (32) est situé dans une relation décalée par rapport à l'axe de barre de cisaillement.

9. Récolteuse-hacheuse de fourrage selon la revendication 8, caractérisée en ce que chacun des leviers (32) est monté pivotant sur un organe formant pivot (33) qui définit un axe de pivotement; chacun desdits organes formant pivots (33) étant au moins partiellement supporté par l'organe de support (23) en arrière de l'axe de barre de cisaillement, lorsqu'on le considère dans la direction d'avancement fonctionnel de la récolteuse-hacheuse.

10. Récolteuse-hacheuse de fourrage selon la revendication 9, caractérisée en ce que l'axe de pivotement de chacun des organes formant pivots (33) s'étend parallèlement à l'axe de barre de cisaillement.

11. Récolteuse-hacheuse de fourrage selon l'une quelconque des revendications précédentes, caractérisée en ce que chacun des moyens de transmission (41, 43, 45) comporte un élément de fixation fileté (41) reçu à travers un orifice (43) traversant le levier (32) correspondant, et en prise par vissage avec la barre de cisaillement (20).

12. Récolteuse-hacheuse de fourrage selon la revendication 11, lorsqu'elle est annexée à l'une quelconque des revendications 3 à 7, caractérisée en ce que l'accouplement de chacun des moyens de transmission (41, 43, 45) avec l'extrémité de barre de cisaillement (21) correspondante, est positionné par rapport à l'organe de serrage (24) correspondant de telle façon que, d'une manière générale, les lignes d'action de la force d'ajustement transmise à la barre de cisaillement (20) par l'intermédiaire desdits moyens de transmission (41, 43, 45), et de la force de serrage exercée sur ladite barre de cisaillement (20) par l'organe de serrage (24) correspondant, se coupent entre elles.

13. Récolteuse-hacheuse de fourrage selon la revendication 12, caractérisée en ce que lesdites lignes d'action se coupent entre elles à angle droit.

14. Récolteuse-hacheuse de fourrage selon l'une quelconque des revendications 11 à 13, caractérisée en ce que l'orifice (43) qui traverse chacun des leviers (32) est plus grand que l'élément de fixation fileté (41) correspondant, pour permettre un mouvement relatif entre eux, lorsque le mouvement de pivotement desdits leviers (32) impartit un mouvement linéaire à ladite barre de cisaillement (20).

15. Récolteuse-hacheuse de fourrage selon la revendication 14, caractérisée en ce que les moyens d'accouplement à joint universel de chacun des moyens de transmission (41, 43, 45) comportent au moins un ensemble de bagues à bille et coupelle (45) coïncidant avec l'orifice (43) prévu dans le levier (32), et à travers les trous duquel s'étend l'élément de fixation fileté (41), pour faciliter ledit mouvement relatif entre le levier (32) et l'élément de fixation (41) correspondant, tout en permettant un serrage étroit de la barre de cisaillement (20) contre les leviers (32).

16. Récolteuse-hacheuse de fourrage selon la revendication 15, caractérisée en ce que les moyens d'accouplement à joint universel de chacun des moyens de transmission (41, 43, 45) comportent des ensembles de bagues à bille et coupelle (45) positionnés de part et d'autre du levier (32) pour coïncider avec l'orifice (43) prévu dans celui-ci, et à travers les trous desquels s'étend l'élément de fixation fileté.

17. Récolteuse-hacheuse de fourrage selon la revendication 16, caractérisée en ce que l'élément de fixation est un boulon à tête (42) reçu à travers les trous prévus dans chacun des ensembles de bagues à bille et coupelle (45) et apte à opérer pour immobiliser la barre de cisaillement (20) en position par rapport aux moyens d'accouplement du type à joint universel.

18. Récolteuse-hacheuse de fourrage selon la revendication 17, caractérisée en ce que chacun des boulons à tête (41) est positionné dans le plan défini par le mouvement de pivotement du levier (32) correspondant.

19. Récolteuse-hacheuse de fourrage selon l'une quelconque des revendications précédentes, caractérisée en ce que les moyens de déplacement (47) comportent des moyens moteurs aptes à être excités pour ajuster la barre de cisaillement (20).

Fig. 1

EP 0 217 461 B1

*Fig. 2*

*Fig. 3*